# EUROPEAN PATENT APPLICATION

(11) **EP 4 212 408 A1**
(43) Date of publication of application: **19.07.2023**
(21) Application number: 23151638.6
(22) Date of filing: 14.01.2023
(51) Int. Cl.: B62B 7/06, B62B 7/14

(54) **BABY CARRIAGE CHASSIS**

(30) Priority: 14.01.2022 CN 202220104856 U
(71) Applicant: BDG Produkcja Sp. z.o.o., 42-262 Poczesna (PL); Sunnylove Baby Products Zhuhai Co., Ltd, Zhuhai, Guangdong 519090 (CN)
(72) Inventor: OSTRASZEWSKI, Artur, 42-261 Lysiec (PL); ZHOU, Jinhua, Zhuhai city, 519090 (CN)
(74) Representative: Marcinska-Porzuc, Aleksandra

(57) **Abstract**

A baby carriage chassis characterized in that it has a frame (10) with a seat (22) connected by means of a connecting slot (21), and the seat (22) may rotate toward a tappet assembly (13) or a front footrest beam (11) of the frame (10) relative to the connecting slot (21), and a first blocking device (23) unlocks a backrest frame (222) relative to a seating part (221), and the motion of the backrest frame (222) toward the seating part (221) may unlock a first unlocking element (224) between the seating part (221) and the connecting slot (21), and this makes it possible to rotate the seat (22) toward the tappet assembly (13) or the front footrest beam (11) of the frame (10), and a third blocking device (223) releases an armrest seat (2261) by means of a fourth blocking device (227) only after unlocking the first blocking device (23) and after unlocking the first unlocking element (224), and then rotation of a rotary plate (2254) is possible by means of an operating part (22541).

## Description

### Field

This invention relates to a baby carriage chassis comprising a frame connected to a seat via connecting slots. The carriage chassis may be freely folded and unfolded. Additionally, the chassis makes it possible to mount the seat in two directions of riding the baby carriage.

### State of the Art

Baby carriages are known in which a seat may be mounted only in one direction of riding the baby carriage. Additionally, these carriages are difficult to fold for a single user using one hand.

Therefore, the aim of the present invention is to propose a baby carriage chassis that makes it possible to mount a seat in two different directions of riding (facing a user and with the back onto a user). Moreover, the invention aims to make it possible for a user, when holding a child with one hand, to operate the mechanism of folding the chassis with the second hand so that the backrest frame, together with a seating part, approaches the front footrest beam, and then could continue the operation of folding the chassis with the same hand in a simple manner until the complete folding.

### Summary

This aim has been reached by a baby carriage chassis of the invention.

The subject matter of the invention is a baby carriage chassis characterized in that it has a frame with a seat connected by means of a connecting slot, wherein the seat may rotate toward a tappet assembly or a front footrest beam of the frame relative to the connecting slot, and a first blocking device unlocks a backrest frame relative to a seating part, and the motion of the backrest frame toward the seating part may unlock a first unlocking element between the seating part and the connecting slot, and this makes it possible to rotate the seat toward the tappet assembly or the front footrest beam of the frame, and a third blocking device releases an armrest seat by means of a fourth blocking device only after unlocking the first blocking device and after unlocking a first unlocking element, and then rotation of a rotary plate is possible by means of an operating part.

The baby carriage chassis has an armrest assembly that may rotate between the seating part and the backrest frame, and all these elements may be mutually interlocked by the backrest frame, and the fourth blocking device is actuated when folding the backrest frame toward the seating part.

Also, the chassis has a second unblocking assembly that is located between the armrest assembly and the connecting slot.

The connecting slot is separably connected to the frame, and the connecting slot has a fifth blocking device that may interlock these two elements with each other.

The frame is additionally equipped with a second blocking device that may be unlocked after demounting the seat and the connecting slot by means of a second unlocking structure.

According to the invention, the third blocking device is connected to the seating part and makes it possible to regulate the backrest frame relative to the seating part by several regulating slots, and the backrest frame is connected by means of a mandrel that may be connected to or disconnected from the regulating slots, wherein the backrest frame is equipped with an operating member, and a mechanism for shifting the mandrel is placed between the operating member and the mandrel, and after pulling the operating member, a cable moves the mandrel between the regulating slots, and between the backrest frame a spring is located that allows the mandrel to return to the regulating slots and thus to the locked state.

The first blocking device consists of a left hinge cover of the seating part, a right hinge cover, wherein a recess is formed between the left hinge cover and the right hinge cover, and a first spline is located between the left and right hinge covers, which may move relative to the left and the right hinge covers, and the return of the first spline is assured by a spring, and the backrest frame actuates a pin of a ring to move it laterally when the backrest frame is rotated and folded toward the seating part by a cam surface.

The armrest assembly comprises an armrest seat pivotally connected between the seating part and the backrest frame, and the armrest seat is connected to the armrest rod, and the fourth blocking device is arranged between the armrest seat and the seating part and the backrest frame, and the fourth blocking device comprises several blocking notches arranged on the armrest seat, and these elements contact the first spline, and a first locking member may be locked in a blocking notch or disconnected from it when moving, and the pins contact the cam surfaces, and when changing the position of the backrest frame relative to the seating part, a cam surface pressures onto the pins and moves the ring, and this shift unlocks the spline of a blocking element of the armrest seat by overcoming the springs that press the first locking member, and after pushing out the first locking member, the armrest seat is unlocked, and, at this time, the armrest seat and the rod may rotate and approach the seating part in order to fold.

The second unblocking assembly comprises a first pressing element slidably connected to the seating part and the connecting slot, and after pressing, a first pressing mandrel may slide out of the connecting slot and unlock the main second blocking device of the carriage. Then, the spring restores the original position of the first pressing element, and a sliding member-slider is located in the backrest frame and the seating part, which may slide relative to the seating part, and the sliding member-slider adheres to the rotary plate.

The rotary plate is equipped with a protrusion that is located in the backrest frame, and the sliding member-slider is equipped with a groove capable of receiving the protrusion in it, and also the sliding member-slider is equipped with a sloped surface that may brush against the protrusion, and the seating part is equipped with a projecting guiding portion that guides a guiding groove that moves laterally, and the backrest frame is also equipped with a pressure portion capable of pressing one side of the first pressing element.

Preferably, the operating part is a handle or a belt.

The second blocking device comprises a first protrusion placed on the rotary plate, and the armrest seat is equipped with a second protrusion that may adhere to the first protrusion to prevent rotation of the rotary plate when the seat and the body of the frame are unfolded, and the backrest frame is also equipped with a niche so as the first protrusion and the second protrusion slide thereinto when the backrest frame is rotated and folded.

Preferably, the second blocking device comprises a left connecting shell connected to the rear footrest beam and a right connecting shell connected to the front footrest beam, and there is a space located between the right connecting shell and the tappet assembly, which is equipped with a second spline that may move relative to the space, and the left connecting shell comprises a spline groove, the tappet assembly comprises a spline groove, and a second spline is located between the left connecting shell and the right connecting shell, and the spline has resilient members that may move, where a pressure member has mandrels that may move the second spline, and a return spring is located between the pressure member and the spline groove of the rear footrest beam.

The solution of the invention has the following advantages:
1. When the carriage frame is to be folded, one should first unlock the third blocking device; at this time, the backrest frame may be folded toward the seating part. During the operation of folding the backrest frame toward the seating part, the backrest frame actuates the first unblocking assembly. When the first unblocking assembly is unlocked, the whole seat may be folded and moved closer to the front connector of the carriage structure. When the seat assembly and the front footrest beam of the carriage are folded and moved closer, the second unblocking assembly is operated, and the second unblocking assembly may unlock the second blocking device, where one may unlock the rear footrest beam and the tappet assembly of the carriage. Then, the tappet assembly gradually moves from the inclined position to the vertical position. At this time, the front footrest beam of the carriage and the seat rotate and approach the rear footrest beam of the carriage structure under their own weight, and the tappet assembly rotates and approaches the rear footrest beam under its weight. The second unblocking assembly may not unlock the second blocking device only then when the backrest frame is folded toward the seating part, and the second unblocking assembly may be operated to unlock after folding the backrest frame toward the seating part and folding the whole seat toward the front connector of the carriage structure.
2. When a user holds a child in one hand, he/she may operate, with the other hand, the blockage of the seat in order to fold it and rotate it on the carriage frame. After folding the seat, the user may operate the second blockage of the carriage to complete the folding process. During the folding process, an adult person may execute both operations using one hand.
3. During the operation of folding the backrest toward the seating part, the fourth blockage is unlocked, and, at this time, the rod may rotate toward the seating part. A user only must fold the backrest toward the seat.
4. The main blocking device may prevent adults from inappropriately operating the second unlocking element to unlock the body of the frame, whereby children may ride more safely.

The invention is explained in embodiments illustrated in the drawing, in which:
Fig. 1 shows a perspective view of a baby carriage frame;
Fig. 2 shows a side view of a baby carriage frame according to the present invention;
Fig. 3 shows a state in which the seat of the baby carriage according to the present invention is folded;
Fig. 4 shows a perspective view of the baby carriage frame according to the present invention when the seat is folded;
Fig. 5 shows a state in which the baby carriage frame according to the present invention is folded;
Fig. 6 shows a perspective view of the baby carriage frame according to the present invention when it is folded;
Fig. 7 shows a perspective view of the body of the frame and the seat assembly in the frame of the baby carriage according to the present invention;
Fig. 8 shows a view of the unfolded body of the frame and the seat assembly in the frame of the baby carriage according to the present invention;
Fig. 9 shows one expanded view of the seat assembly, a railing assembly, a connecting seat, and any corresponding blocking device in the carriage frame according to the present invention;
Fig. 10 is an enlarged view of Fig. 9;
Fig. 11 is a second view, in the unfolded state, of the seat assembly, the railing assembly, the connecting seat, and any corresponding blocking device in the carriage frame according to the present invention;
Fig. 12 is an enlarged view of Fig. 11;
Fig. 13 shows a perspective view of the seating part in the carriage frame according to the present invention;
Fig. 14 shows a perspective view of a backrest frame in the carriage frame according to the present invention;
Fig. 15 shows a perspective view of a slider in the carriage frame according to the present invention;
Fig. 16 shows a perspective view of a rotary plate in the carriage frame according to the present invention;
Fig. 17 shows a perspective view of a seat with a railing in the carriage frame according to the present invention;
Fig. 18 shows a perspective view of the seat assembly in a folded state of the carriage frame according to the present invention;
Fig. 19 shows a view of the seat assembly, a connecting and main body of the frame in the carriage structure according to the present invention;
Fig. 20 shows a view of the main structure of the baby carriage frame according to the present invention;
Fig. 21 shows a perspective view of a second unlocking structure in the frame of the baby carriage according to the present invention.

The present specification presents embodiments of a baby carriage chassis.

However, it should be stressed that the examples described below are not intended to limit the scope of protection. On the contrary, they only illustrate one of many possible applications of the present invention. The present invention may be employed everywhere where one recognizes a need for easy unlocking and folding of a baby carriage chassis.

### Detailed description of the invention

According to the invention, a baby carriage chassis comprises a frame 10 that may be folded or unfolded. The frame 10 is connected to a seat 22 by means of a connecting slot 21. The connecting slot 21 is connected to the frame that may rotate relative to it. The seat 22 may be folded toward the frame 10. The seat 22 is equipped with a first blocking device 23, located between the seat 22 and the connecting slot 21, that may block these two elements relative to each other. The body of the frame 10 comprises a rotary connection between a front footrest beam 11, a tappet assembly 13, and a rear footrest beam 12. The front footrest beam 11, the tappet assembly 13, and the rear footrest beam 12 are equipped with a main second blocking device 14 that may block the structure of the frame 10 in the unfolded state. The seat 22 comprises a seating part 221 that is rotatably connected to the connecting slot 21. The seating part 221 is connected to a backrest frame 222 that may be rotated and unfolded or folded close to it. The backrest frame 222 is connected to the seating part 221. A third blocking device 223 is arranged between the seating part 221 and may block the backrest frame 222 in an unfolded position. Also, the seat 22 is equipped with a third blocking device 223, and the backrest frame 222 is close to the seating part 221 when the third blocking device 223 is unlocked. A first unlocking element 224 may unlock the first blocking device 23 from the seat 22. The main second blocking device 14 may not be unlocked until the seat 22 will not be folded to the front footrest beam 11, whereby one may fold the frame 10.

Also, an armrest assembly 226 is pivotally connected between the seating part 221 and the backrest frame 222. Also, the armrest assembly 226, the seating part 221, and the backrest frame 222 are equipped with a device that may interlock these three elements relative to each other and may be connected to the backrest frame 222. Moreover, there is a fourth blocking device 227 that may be locked and unlocked by the backrest frame 222 during the operation of folding the backrest frame 222 toward the seating part 221.

A second blocking device 228 is located between the armrest assembly 226 and a second unblocking assembly 225, which may prevent unlocking the main second blocking device 14 by the second unblocking assembly 225 when the seat 22 and the body of the frame 10 are unfolded.

The connecting slot 21 is separably connected to the carriage frame 10, and a fifth blocking device 3 is located between the connecting slot 21 and the carriage frame 10, which is capable of interlocking the connecting slot 21 and the carriage frame 10.

Moreover, the carriage frame 10 is equipped with a second unlocking structure 15 capable of unlocking the main second blocking device 14 after demounting the seat 22 and the connecting slot 21.

The third blocking device 223 comprises several regulating slots 2231 that are arranged peripherally on the seating part 221 and may regulate the inclination of the backrest frame 222 relative to the seating part 221. A mandrel 2232 may be connected to or disconnected from the regulating slots 2231 when the backrest frame 222 is equipped with an operating member 2233. After pulling the operating member 2233, a cable 2234 is actuated between the operating member 2233 and the mandrel 2232. Moreover, the cable 2234 for moving the mandrel 2232 is equipped with a spring 2235 between the mandrel 2232 and the backrest frame 222, which may keep the mandrel 2232 in the locked state.

The first blocking device 23 comprises a left hinge cover 231 for the seating part 221 and a right hinge cover 232 for the seating part 221 located on the seat 22. A recess 233 is located between the left hinge cover 231 and the right hinge cover, and both the left hinge cover 231as well as the right hinge cover 232 are equipped with a first spline groove 234, and the recess 233 is equipped with a first spline 235 that may move relative to the left hinge cover 231 and split away from the left hinge cover 231, and a first spring 236 is placed between the first spline 235 and the right hinge cover 232, which makes it possible to lock the first spline 235 against the first spline groove 234 on the left hinge cover 231 and the right hinge cover 232. A first ring 237 is located between the first spline 235 and the left hinge cover 231, which may push the first spline 235 so as it moves during the folding process, and the first ring 237 is located on a first pin 2371 projecting outwardly from the ring 237. The first unlocking element 224 is placed on the backrest frame 222 and may push a first cam when the backrest frame 222 is rotated and folded toward the seating part 221. Then, the pin 2371 of the cam ring actuates, in turn, the ring 237 for lateral movement.

The armrest assembly 226 comprises an armrest seat 2261 pivotally connected between the seating part 221 and the backrest frame 222, and the armrest assembly 2261 is connected to an armrest rod 2262. A fourth blocking device 227 is placed on the armrest seat 2261 between the seating part 221 and the backrest frame 222. The fourth blocking device 227 comprises several blocking notches 2271 located on the armrest seat 2261. The first spline 235 and the right hinge cover 232 are connected to a first locking member 2272 that may be locked or separated from the blocking notch 2271 by means of two skids. The blocking notches 2271 are appropriately arranged by means of a catch portion 22721. Moreover, the backrest frame 222 is equipped with a projecting catch portion 2221 that may reach a ring of the armrest seat 2261. Also, there is a cam 2222 that is located in the backrest frame 222 and may press onto a skid of the ring of the catch portion 22721 so as to actuate the ring of the first locking member 2272 to move it when the backrest frame 222 is rotating. The first locking member 2272 , in which a second spring 2273 is located, is connected to the right hinge cover 232 and keeps the ring of the first locking member 2272 and the armrest seat 2261 in the locked state.

The second unblocking assembly 225 comprises a first pressing element 2251. A first pressing mandrel 22511 is located outside the connecting slot 21 and unlocks the structure of the carriage frame. Also, a third spring 2252 is located between the first pressing element 2251 and the connecting slot 21, which is a releasing element in the first pressing element 2251. The backrest frame 222 and the seating part 221 are also connected to a sliding member-slider 2253 that may move relative to them, and the backrest frame 222 is also rotatably connected to a rotary plate 2254 that may actuate the sliding member-slider 2253 for moving. An operating part 22541 is connected to the rotary plate 2254, which actuates the folding system.

The rotary plate 2254 is equipped with a protrusion 22542 that may project in the backrest frame 222. The sliding member-slider 2253 is equipped with a groove 22531 that has protrusions 22542. The sliding member-slider 2253 has a sloped surface 22532 that may receive and cooperate with a guiding portion 2211. A guiding groove 22533 makes it possible to move the sliding member-slider 2253 laterally. Moreover, the backrest frame 222 is equipped with a pressure portion 2212 capable of pressing a side of the first pressing element 2251.

The operating part 22541 is a handle or a belt.

The second blocking device 228 comprises a first protrusion 2281 intended for the rotary plate 2254. The armrest seat 2261 is equipped with a first protrusion 2281 that is connected when the seat 22 and the body of the frame 10 are unfolded. A second protrusion 2282 is pressed to the rotary plate 2254 to prevent any rotation. Moreover, the backrest frame 222 is equipped with a niche 2283, so the first protrusion 2281 and the second protrusion 2282 move inside it when the backrest frame 222 is rotated and folded.

The main second blocking device 14 comprises a left connecting shell 141 on a rear footrest beam and a right connecting shell 142 on the front footrest beam 11. The left connecting shell 141, the right connecting shell 142 and the tappet assembly 13 have an active space 143 with a spline between them, and a second spline 144, which may move relative to this spline, is arranged in the active space 143. The left connecting shell 141 is equipped with a second spline groove 145. A third spline groove 140 is located on the tappet assembly 13. The right connecting shell 142 is equipped with a protrusion 146. In the middle between the second spline 144 and the right connecting shell 142 there is a resilient member 147 that is connected to the second spline groove 145, the third spline groove 140 and the protrusion 146. The left connecting shell 141 is connected to a pressure member 148 that may move relative to the space. The pressure member 148 is equipped with a mandrel 1481 that may push the second spline 144 for moving so as the second spline 144 is separated from the second spline 145 and the third spline groove 140. The pressure member 148 is connected to the right connecting shell 142. Between the right connecting shell 142 a return spring 149 is located that may push the pressure member 148 for return.

The second unlocking structure 15 is a tilting block that is pivotally connected to the left connecting shell 141 and may press onto the pressure member 148 to unlock the second blocking device 14 during a rotation relative to the left connecting shell 141. An operating portion 151 is envisaged.

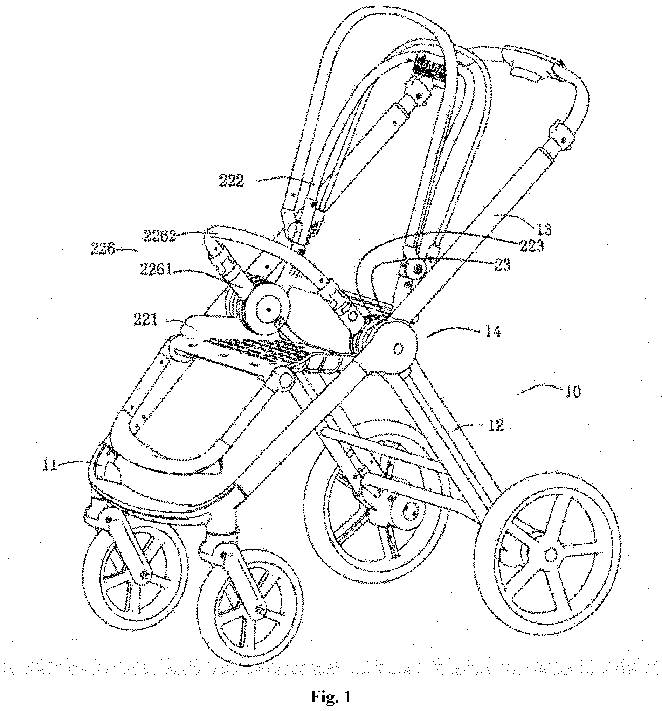

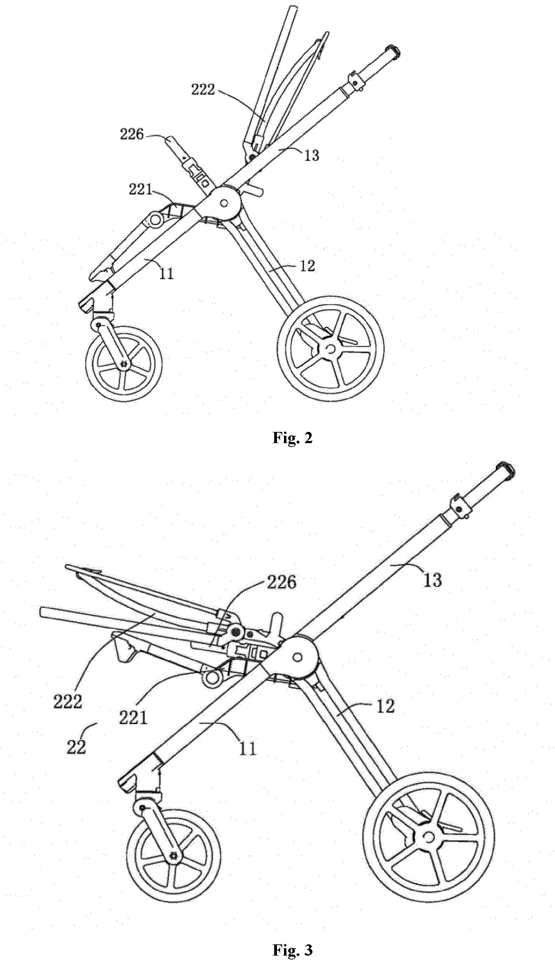

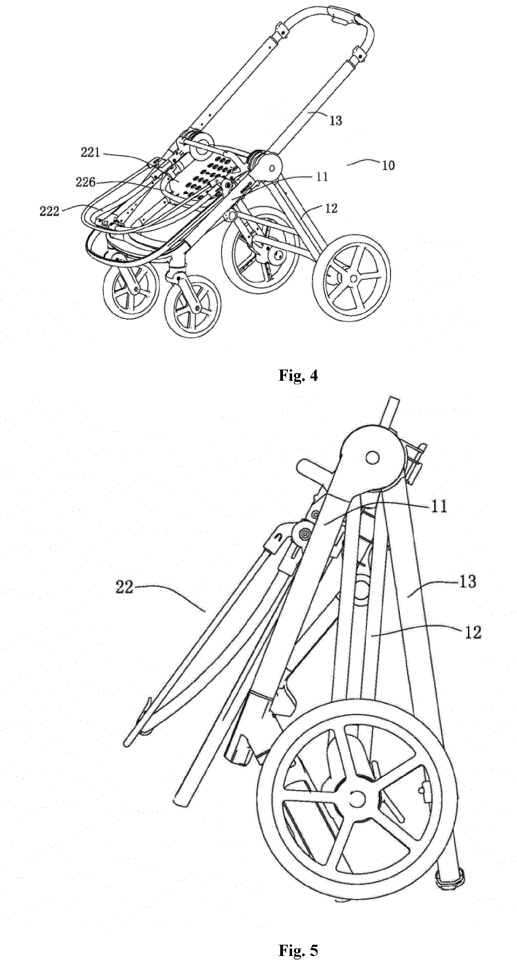

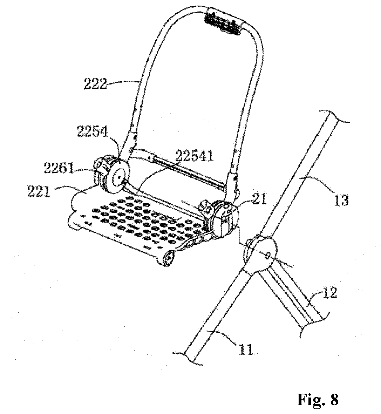

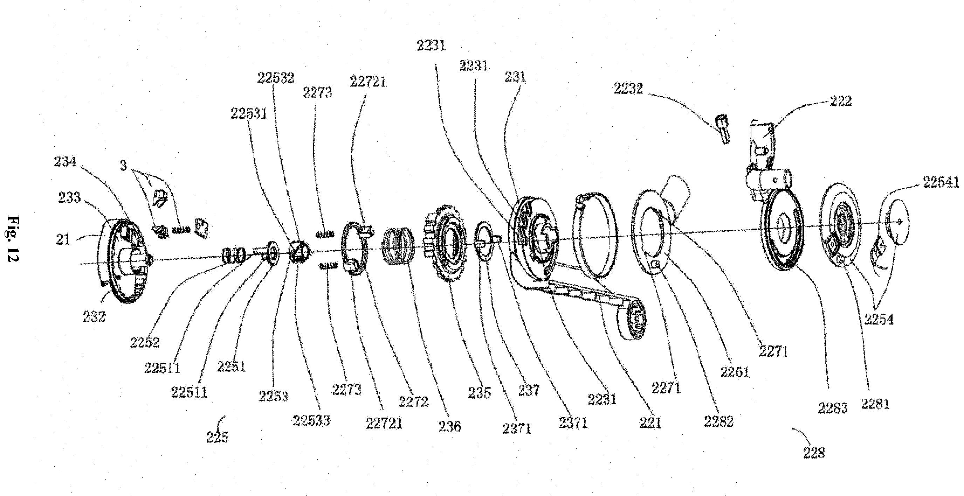

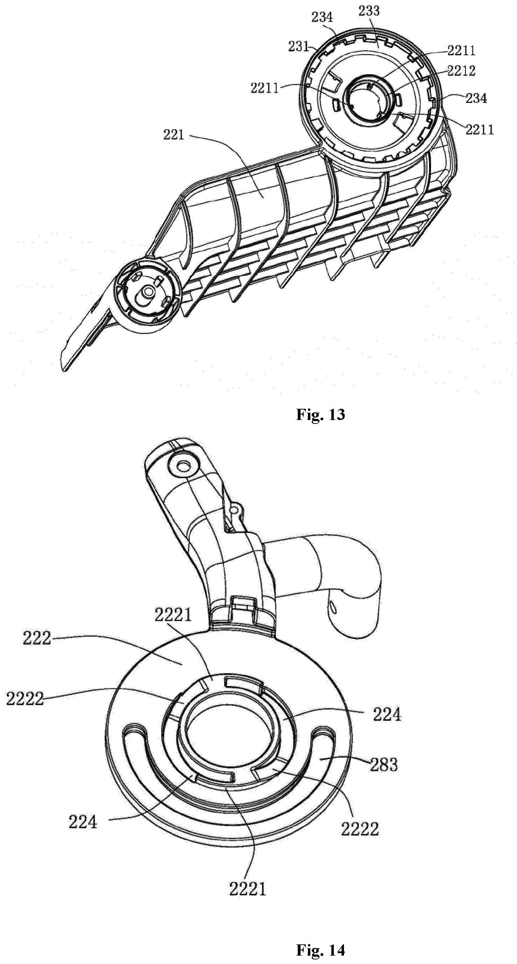

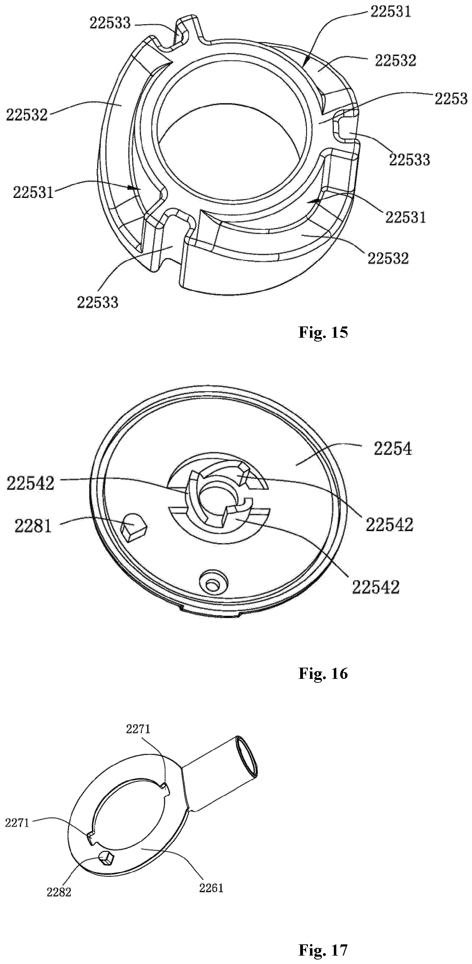

As shown in Figs. 1 to 21, the present invention relates to a baby carriage chassis that comprises a frame 10 that may be folded or unfolded, and a connecting slot 21 is connected to the frame 10 and also it is connected to a seat 22 that may be rotated relative to the connecting slot 21 and folded toward the frame 10. A first blocking device 23 is located between the seat 22 and the connecting slot 21, which may interlock both these elements relative to each other. The frame 10 comprises a front footrest beam 11, a tappet assembly 13, and a rear footrest beam 12, which are rotatably connected to each other. The main second blocking device 14 in the unfolded state is the seat 22 comprising a seating part 221 connected rotatably with the connecting slot 21, and the seating part 221 is connected to a backrest frame 222 that may be rotated relative to it for unfolding or folding. A third blocking device 223 is located between the backrest frame 222 and the seating part 221. After unlocking the third blocking device 223, the backrest 222 will be moved closer to the seating part 221. During changing the angle between the first unlocking element 224, the first blocking device 23 becomes unlocked. Moreover, the seat 22 is equipped with a second unblocking assembly 225 of the main second blocking device 14, which may only act after folding the seat 22 toward the front footrest beam 11.

Then, after unlocking, the rear footrest beam 12 is lifted and gradually moves from the inclined position to the vertical position. At this time, the front footrest beam 11 and the seat 22 are located close to the rear beam 12. During the folding process, the tappet assembly 13 rotates on a connector of the frame and approaches the rear beam 12 under its own weight.

When an adult person holds a child in one hand, he/she may operate the mechanism of folding the backrest with the other hand so as it approaches the front footrest beam 11, and then he/she may operate the second unblocking assembly 225 with one hand to complete the folding the whole chassis whereby the operation is simple. The second unblocking assembly 225 may not unlock the main second blocking device 14 that locks the frame of the carriage if the backrest frame 222 of the seat is not folded toward the seating part 221 and the whole seat 22 is not folded toward the front footrest beam 11. The second unblocking assembly 225 may only act when the backrest frame 222 is folded and is located close to the seating part 221. Only then, one may operate the second unblocking assembly 225 to unlock the main second blocking device 14 and unlock the frame 10. Such an arrangement guarantees the safety of a child when exploiting the carriage and prevents folding the carriage when using it inappropriately.

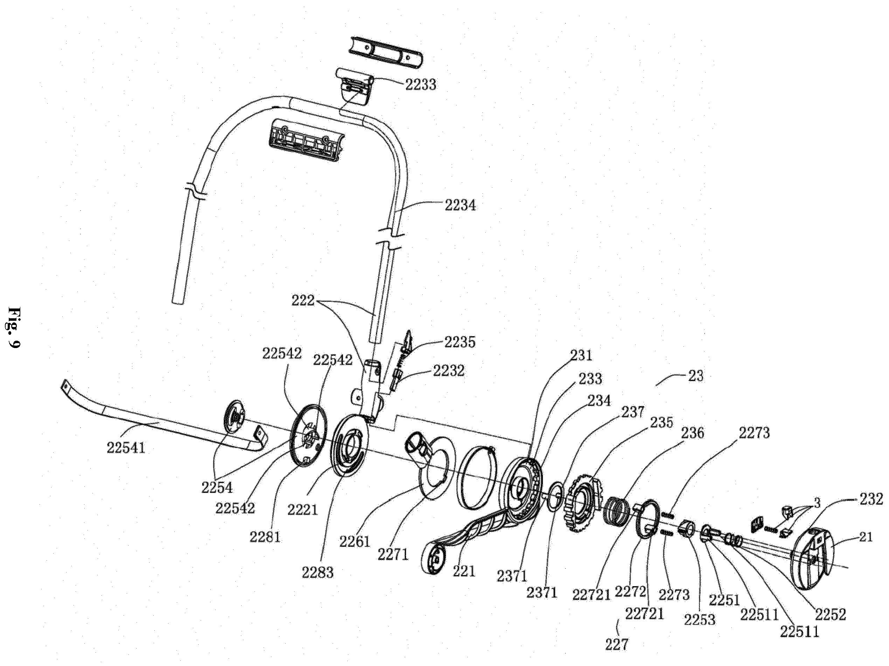

As shown in Figs. 9 to 10, an armrest assembly 226 is also rotatably connected between the seat 221 and the backrest frame 222. A fourth blocking device 227 is located between the armrest assembly 226, the seating part 221, and the backrest frame 222, which may be locked and unlocked by the backrest frame 222 during the operation of folding the backrest frame 222 toward the seating part 221. When the backrest frame 222 is folded toward the seating part 221, the fourth blocking device 227 is unlocked, and the armrest assembly 226 may be, at this time, rotated toward the seating part 221. To unlock the fourth blocking device 227, an adult person only must operate the backrest frame 222 to rotate it toward the seating part 221 after unlocking the third blocking device 223.

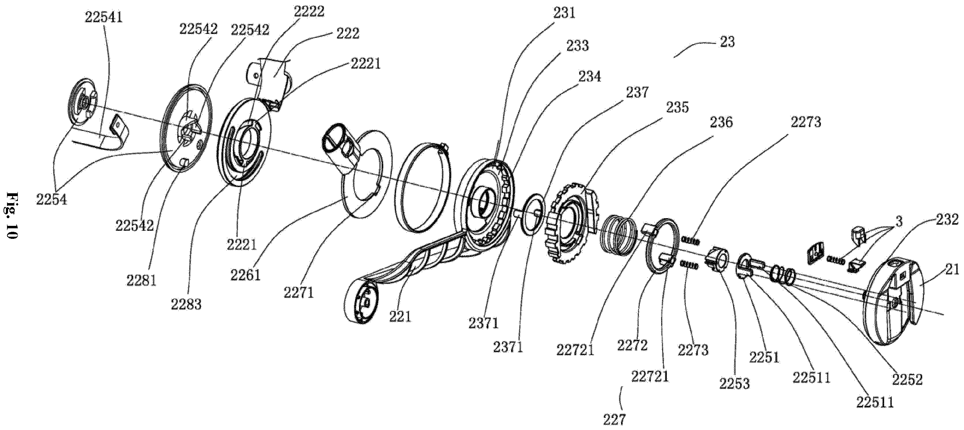

Fig. 10 shows a fifth blocking device 3 that blocks the connecting slot 21 with the frame 10. When the fifth blocking device 3 is unlocked, one may disconnect the connecting slot 21 and the seat 22 from the body of the frame 10.

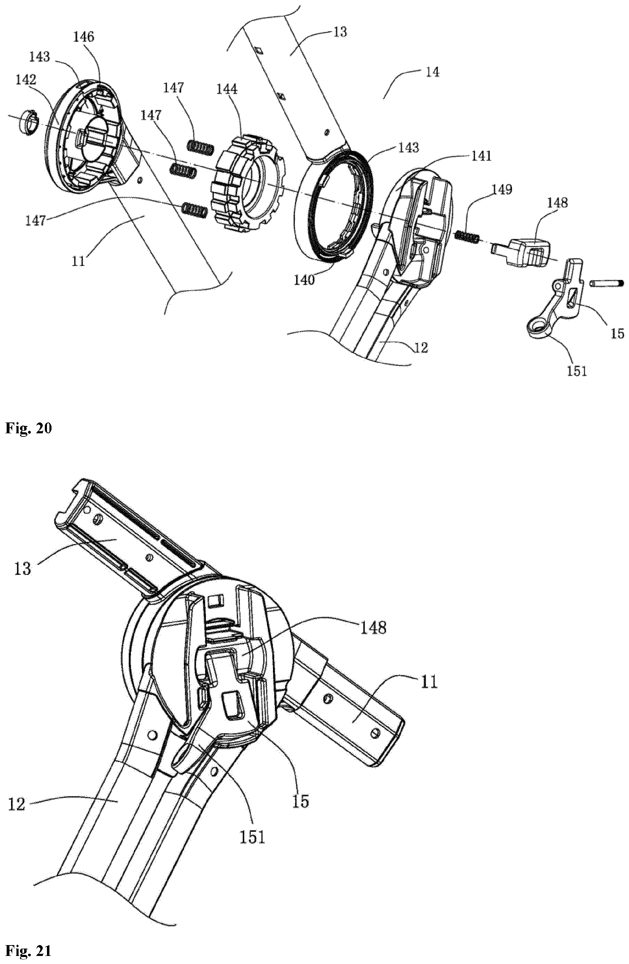

As shown in Fig. 21, the carriage frame 10 is also equipped with a second unlocking structure 15 that makes it possible to unlock the second blocking device 14 after demounting the seat 22 with the connecting slot 21. After disconnecting the seat 22 from the body of the frame 10, the second blocking device 14 may be unlocked by operating the second unlocking structure 15, and also, the carriage frame 10 may be folded. The second unlocking structure 15 may only act after disconnecting the seat 22 with the connecting slot 21, and this may prevent malfunctioning of the second unlocking structure 15 in order to unlock the carriage frame 10.

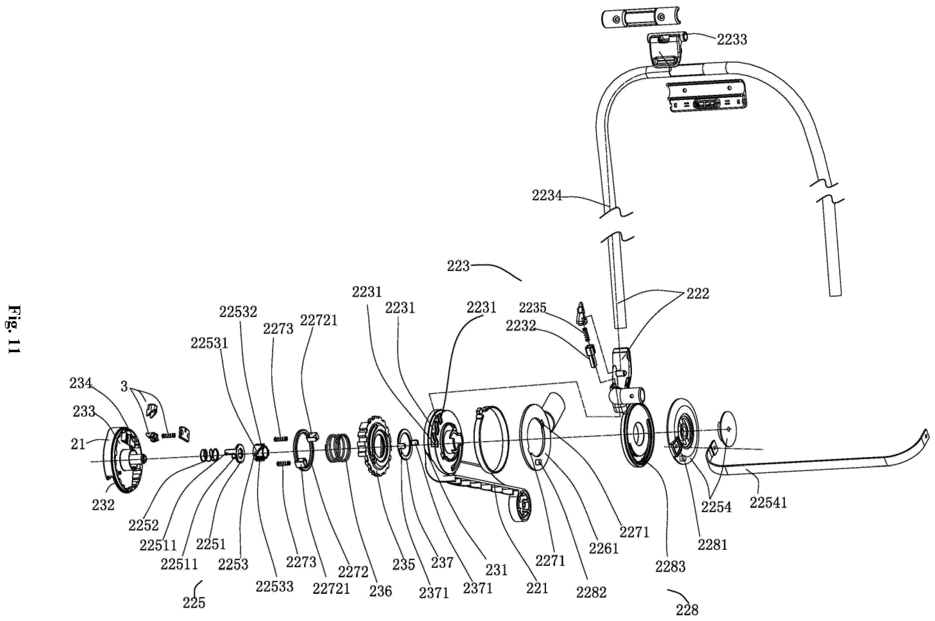

As shown in Fig. 11, the third blocking device 223 comprises several regulating slots 2231 that are arranged on the circumference of the seating part 221 and may regulate the inclination of the backrest frame 222 relative to the seating part 221. The backrest frame 222 is equipped with an operating member 2233, and a cable 2234 is located between the operating member 2233 and a mandrel 2232, which may move the mandrel 2232. A spring 2235 is located between the mandrel 2232 and backrest frame 222, which keeps the mandrel 2232 in the locked state. When the position of the backrest frame 222 is changed relative to the seating part 221, the operating member 2233 is actuated. After actuating the operating member 2233, the cable 2234 moves the mandrel 2232 to a selected position of the backrest frame 222 relative to the seating part 221.

When the backrest frame 222 is in a regulating slot 2231, the operating member 2233 is released, and the spring 2235 presses the mandrel 2232 to an appropriate regulating slot 2231. The backrest frame 222 together with the seating part 221 are locked. When one needs to fold the backrest frame 222 relative to the seating part 221, the operating member 2233 releases the mandrel 2232, and the backrest frame 222 may be rotated back.

As shown in Figs. 9 to 12, the first blocking device 23 is located between the left hinge cover 231 of the seating part 221 and the right hinge cover 232 of the connecting slot 21. Both the left hinge cover 231 as well as the right hinge cover 232 possess spline grooves 234. A recess 233 in the seating part allows for moving a first spline 235 in order to disconnect the seating part 221 from the connecting slot 21.

The splines 235 (toothed wheels) are arranged so that one may connect or disconnect the seating part 221 and connecting slot(s) 21 in only one position.

A ring 237, pushing a spring 236, is responsible for coupling and decoupling the spline 235.

The ring 237 is equipped with projecting pins 2371 that point at the seating part 221 and touch the cams of the first unlocking element 224 located on the backrest frame 222 that rotates toward the seating part 221 on the backrest frame 222. In order to unlock the first blocking device 23, firstly, one must unlock the third blocking device 223. Then, the backrest frame 222 may be folded toward the seating part 221. During this movement, a first driving surface (the cam) on the backrest frame 222 presses onto a projecting pin 2371. The ring 237 moves the spline 235 relative to the left hinge cover 231 and the right hinge cover 232. During this process, the seating part 221 becomes decoupled from the right hinge cover 232 since the spline 235 wholly enters the spline of the right hinge cover 232 and presses the spring 236.

The first blocking device 23 becomes unlocked, and the seating part 221 may be rotated relative to the first blocking device 23.

During the process of getting the backrest frame 222 close to the seating part 221, the whole seat 22 is also rotated relative to the connecting slot 21 and approaches the front footrest beam 11.

As shown in Figs. 9 to 12, the armrest assembly 226 comprises an armrest seat 2261 pivotally connected between the seating part 221 and the backrest frame 222. The armrest seat 2261 is connected to the armrest rod 2262. The fourth blocking device 227 is arranged between the armrest seat 2261 and the seating part 221, and the backrest frame 222. The fourth blocking device 227 comprises several blocking notches 2271 arranged on the armrest seat 2261. This element contacts the first spline 235. A first locking member 2272 may be locked by the blocking notch 2271 or decoupled from it when moving. The blocking notches 2271 touch the cam 2222. When changing the position of the backrest frame 222 relative to the seating part 221, the cam 2222 pressures onto the pins 2371 and moves the ring 237. This shift unlocks the spline of the armrest seat 2261 by overcoming the springs 2273 that press the first locking member 2272. After pushing the first locking member 2272 out, the armrest seat is unlocked. At this time, the armrest seat 2261 and the rod may rotate and approach the seating part 221 in order to fold.

As shown in Figs. 9 to 12, the second unblocking assembly 225 comprises a first pressing element 2251 slidably connected to the seating part 221 and the connecting slot 21. After pressing, a first pressing mandrel 22511 may slide out of the connecting slot 21 and unlock the second blocking device 14 - the lock of the carriage. A spring 2252 restores the original position of the first unlocking element 2251.

A sliding member-slider 2253 is located in the backrest frame 222 and the seating part 221, which may slide relative to the seating part 221. The sliding member-slider 2253 adheres to a rotary plate 2254. After folding the seat 22, also the second blocking device 228 unlocks. The rotary plate 2254 may rotate relative to the seating part 221 and the backrest frame 222. During the rotation of the rotary plate 2254, the sliding member-slider 2253 is pressed to the first pressing element 2251, and also, the spring 2252 is compressed. When the first pressing element 2251 moves, the first pressing mandrel 22511, which is located thereon, exserts outside the connecting slot 21 to unlock the main second blocking device 14, and at this moment, the whole carriage frame 10 may be folded.

As shown in Figs. 9-13, the rotary plate 2254 is equipped with a protrusion 22542 that may project in the backrest frame 222, and the sliding member-slider 2253 is equipped with a groove 22531 that may receive the protrusion 22542. Moreover, the sliding member-slider 2253 is equipped with a sloped surface 22532 that may abut against the protrusion 22542.

The seating part 221 is equipped with a projecting guiding portion 2211. The sliding member-slider 2253 is also equipped with the guiding portion 2211. When the rotary plate 2254 rotates, the outer sidewall of the protrusion 22542 on the rotary plate 2254 presses onto the sloped surface 22532 of the sliding member-slider 2253 so as the sliding member-slider 2253 moves relative to the backrest frame 222 and the seating part 221. During this process, the sliding member-slider 2253 is blocked by the guiding grooves 22533 on the seating part 221 and only may move laterally relative to the backrest frame 222 and the seating part 221.

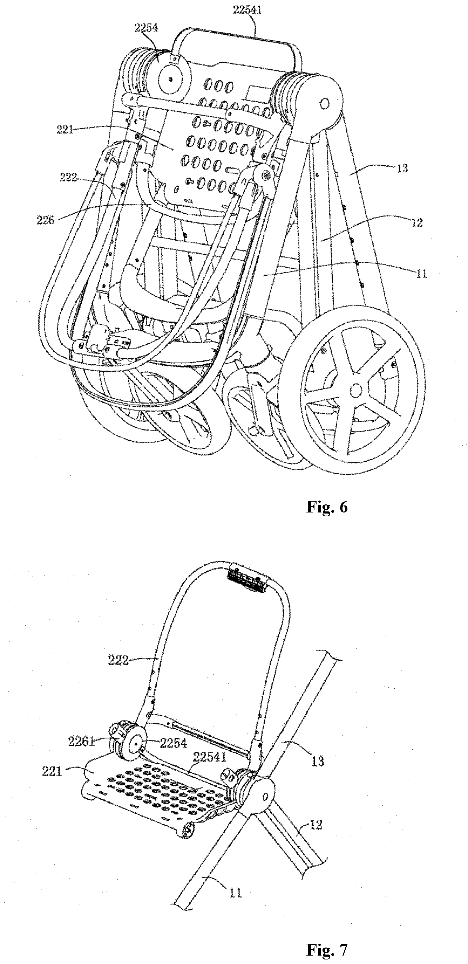

As shown in Fig. 6, the operating part 22541 is a belt or a cable. It is convenient to operate for adults and pulling with one hand. To release the blockage by means of the belt, it is necessary to fold the seat 22. Then, a link of the operating part 22541 is visible and appropriately directed for more convenient operation by adults with only one hand.

As shown in Figs. 9 to 12, the second blocking device 228 comprises a first protrusion 2281 intended for the rotary plate 2254. The protrusion does not allow for releasing the rotation of the plate to actuate the moving assembly when the seat 221 and backrest 222 are in the unfolded position. After folding the backrest frame 222 to the seating part 221, the second blocking device 228 is also released. The first protrusion 2281 and the second protrusion 2282 split apart, and this makes it possible to rotate the rotary plate 2254 and start the folding system.

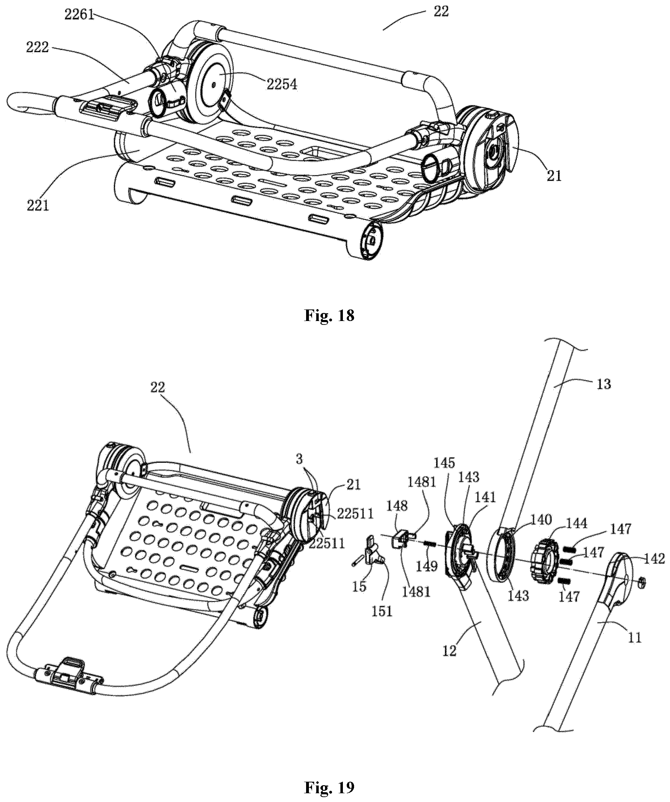

As shown in Figs. 19 do 20, the main second blocking device 14 comprises a left connecting shell 141 that connects the rear footrest beam and a right connecting shell 142 that connects the front footrest beam 11. There is a space located between the right connecting shell 142 and the tappet assembly 13, which is equipped with a second spline 144 that may move relative to the space. The left connecting shell 141 comprises another spline groove 145, and the tappet assembly 13 comprises a third spline groove 140. The second spline 144 is located between the first and the second connecting shells, and the spline has resilient members 147 that may move. The pressure member 148 has mandrels 1481 that may move the second spline 144. A return spring 149 is located between the pressure member 148 and the spline groove 145.

According to the invention, the main second blocking device 14 has at least three ways of unlocking.

A first way. When the seat 22 assembly is installed on the carriage structure. To unlock the frame 10, one should unlock the third blocking device 223. After unlocking the third blocking device 223, the backrest frame 222 may be folded toward the seating part 221. Then, one may operate an operating part in the form of a belt 22541, which actuates the rotary plate 2254, and the rotary plate 2254 actuates the first pressing mandrel 22511 in the connecting slot 21. After sliding out the first pressing mandrel 22511, the second pressure member is released 148, and the second spline 144 is moved relative to the left connecting shell 141 of the rear footrest beam, the spline groove 140, and the right connecting shell 142 of the front footrest beam. After moving the second spline 144, released are the spline groove 145 of the left connecting shell 141 of the rear footrest beam and the spline groove 140 relative to the right connecting shell 142 of the front footrest beam.

When an adult person lifts the operating member 22541, the rear footrest beam 12 of the carriage changes its position gradually from the inclined state to the vertical state, and the front footrest beam 11 of the carriage and the seat 22 approach the rear footrest beam 12 under own weight.

Therefore, when an adult person holds a child in one hand, she/he may operate the seat 22 with the other hand to rotate it toward the front footrest beam 11 and then pull the operating member 22541 with one hand to complete the process of folding the whole frame 10, and this makes the folding operation more convenient and safe.

A second way. After pulling the seat 22 from the frame 10, a user has an access to the second blocking device 14 by pressing the pressure member 148 directly.

A third way. When the seat 22 is disconnected from the frame 10, the second unlocking structure 15 appears. After tilting the second unlocking structure 15, the pressure member 148 is moved to unlock the second blocking device 14.

As shown in Fig. 21, the second unlocking structure 15 is a tiltable member that is rotatably connected to the left connecting shell 141 and may press onto the pressure member 148 to unlock the main second blocking device 14 when rotating relative to the left connecting shell 141 of the rear footrest beam. The rotary block is equipped with the operating portion 151. When the operating portion 151 is actuated, the rotary block rotates relative to the left connecting shell 141 of the rear footrest beam, and the rotary block presses onto the pressure member 148 for unlocking.

### List of references

- 3: fifth blocking device [9, 10, 11, 12, 19]
- 10: frame [1, 4]
- 11: front footrest beam [1, 2, 3, 4, 5, 6, 7, 8, 19, 20, 21]
- 12: rear footrest beam [1, 2, 3, 4, 5, 6, 7, 8, 19, 20, 21]
- 13: tappet assembly [1, 2, 3, 4, 5, 6, 7, 8, 19, 20, 21]
- 14: second blocking device [1, 20]
- 15: second unlocking structure [19, 20, 21]
- 21: connecting slot [8, 9, 10, 11, 12, 18, 19]
- 22: seat [3, 5, 18, 19]
- 23: first blocking device [1, 9, 10]

- 140: spline groove [19, 20]
- 141: left connecting shell [19, 20]
- 142: right connecting shell [19, 20]
- 143: active space [19, 20]
- 144: second spline [19, 20]
- 145: spline groove [19]
- 146: protrusion [20]
- 147: resilient member [19, 20]
- 148: pressure member [19, 20, 21]
- 149: return spring [19, 20]
- 151: operating portion [19, 20, 21]
- 221: seating part [1, 2, 3, 4, 6, 7, 8, 9, 10, 11, 12, 13, 18]
- 222: backrest frame [1, 2, 3, 4, 6, 7, 8, 9, 10, 11, 12, 14, 18]
- 223: third blocking device [1, 11]
- 224: first unlocking element [14]
- 225: second unblocking assembly [11, 12]
- 226: armrest assembly [1, 2, 3, 4, 6]
- 227: fourth blocking device [9, 10]
- 228: second blocking device [11, 12]
- 231: left hinge cover [9, 10, 11, 12, 13]
- 232: right hinge cover [9, 10, 11, 12]
- 233: recess [9, 10, 11, 12, 13]
- 234: first spline groove [9, 10, 11, 12, 13]
- 235: first spline [9, 10, 11, 12]
- 236: spring [9, 10, 11, 12]
- 237: ring [9, 10, 11, 12]
- 283: arched slot [14]

- 1481: mandrel [19]
- 2211: guiding portion [13]
- 2212: pressure portion [13]
- 2221: catch portion [9, 10, 14]
- 2222: cam [10, 14]
- 2231: regulating slot [11, 12]
- 2232: mandrel [9, 11, 12]
- 2233: operating member [9, 11]
- 2234: cable [9, 11]
- 2235: spring [9, 11]
- 2251: first pressing element [9, 10, 11, 12]
- 2252: spring [9, 10, 11, 12]
- 2253: sliding member-slider [9, 10, 11, 12, 15]
- 2254: rotary plate [6, 7, 8, 9, 10, 11, 12, 16]
- 2261: armrest seat [1, 7, 8, 9, 10, 11, 12, 17, 18]
- 2262: armrest rod [1]
- 2271: blocking notch [9, 10, 11, 12, 17]
- 2272: first locking member [9, 11, 12]
- 2273: spring [9, 10, 11, 12]
- 2281: first protrusion [9, 10, 11, 12, 16]
- 2282: second protrusion [11, 12, 17]
- 2283: niche [10, 11, 12]
- 2371: pin [9, 10, 11, 12]

- 22511: first pressing mandrel [9, 10, 11, 12, 19]
- 22531: groove [11, 12, 15]
- 22532: sloped surface [11, 12, 15]
- 22533: guiding groove [11, 12, 15]
- 22541: operating part [6, 7, 8, 9, 10, 11, 12]
- 22542: protrusion [9, 10, 16]
- 22721: catch portion [9, 10, 11, 12]

## Claims

1. A baby carriage chassis **characterized in that** it has a frame (10) with a seat (22) connected by means of a connecting slot (21), and the seat (22) may rotate toward a tappet assembly (13) or a front footrest beam (11) of the frame (10) relative to the connecting slot (21), and a first blocking device (23) unlocks a backrest frame (222) relative to a seating part (221), and the motion of the backrest frame (222) toward the seating part (221) may unlock a first unlocking element (224) between the seating part (221) and the connecting slot (21), and this makes it possible to rotate the seat 22 toward the tappet assembly (13) or the front footrest beam (11) of the frame (10), and a third blocking device (223) releases an armrest seat (2261) by means of a fourth blocking device (227) only after unlocking the first blocking device (23) and after unlocking the first unlocking element (224), and then rotation of a rotary plate (2254) is possible by means of an operating part (22541).

2. The baby carriage chassis according to claim 1, **characterized in that** it has an armrest assembly (226) rotatable between the seating part (221) and the backrest frame (222), and all these elements may be mutually interlocked by the backrest frame (222), and the fourth blocking device (227) is actuated when folding the backrest frame (222) toward the seating part (221).

3. The baby carriage chassis according to claim 2, **characterized in that** it has a second unblocking assembly (225) that is located between the armrest assembly (226) and the connecting slot (21).

4. The baby carriage chassis according to claim 2, **characterized in that** the connecting slot (21) is separably connected to the frame (10), and the connecting slot (21) has a fifth blocking device (3) that may block these two elements with each other.

5. The baby carriage chassis according to claim 1, **characterized in that** the frame (10) is additionally equipped with a second blocking device that may be unlocked after demounting the seat (22) and the connecting slot (21) by means of a second unlocking structure (15).

6. The baby carriage chassis according to claim 1, **characterized in that** the third blocking device (223) is connected to the seating part (221) and makes it possible to regulate the backrest frame (222) relative to the seating part (221) by several regulating slots (2231), and the backrest frame (222) is connected by means of a mandrel (2232) that may be connected to or disconnected from the regulating slots (2231), wherein the backrest frame (222) is equipped with an operating member (2233), and a mechanism for shifting the mandrel (2232) is placed between the operating member (2233) and the mandrel (2232), and after pulling the operating member (2233), a cable (2234) moves the mandrel (2232) between the regulating slots (2231), and a spring (2235) is located between the backrest frame (222), which allows the mandrel to return (2232) to the regulating slots (2231) and thus to the locked state.

7. The baby carriage chassis according to claim 3, **characterized in that** the first blocking device (23) consists of a left hinge cover (231) of the seating part (221), a right hinge cover (232), and a recess (233) is formed between the left hinge cover (231) and the right hinge cover (232), and a first spline (235) is located between the left (231) and the right (232) hinge covers, which may move relative to the left (231) and the right (232) hinge covers, and the return of the first spline (235) is assured by a spring (236), and the backrest frame (222) actuates a pin (2371) of a ring (237) to move it laterally when the backrest frame (222) is rotated and folded toward the seating part (221) by a cam surface (2222).

8. The baby carriage chassis according to claims 1-7, **characterized in that** the armrest assembly (226) comprises an armrest seat (2261) pivotally connected between the seating part (221) and the backrest frame (222), and the armrest seat (2261) is connected to the armrest rod (2262), and the fourth blocking device (227) is arranged between the armrest seat (2261) and the seating part (221) and the backrest frame (222), and the fourth blocking device (227) comprises several blocking notches (2271) arranged on the armrest seat (2261), and these elements contact the first spline (235), and the first locking member (2272) may be locked in a blocking notch (2271) or disconnected from it when moving, and the pins (2371) contact the cam surfaces (2222), and when changing the position of the backrest frame (222) relative to the seating part (221), the cam surface (2222) pressures onto the pins (2371) and moves the ring (237), and this shift unlocks the spline of a blocking element of the armrest seat (2261) by overcoming the springs (2273) that press the first locking member (2272), and after pushing out the first locking member (2272), the armrest seat (2261) is unlocked, and, at this time, the armrest seat (2261) and a railing may rotate and approach the seating part (221) in order to fold.

9. The baby carriage chassis according to claims 1-8, **characterized in that** the second unblocking assembly (225) comprises a first pressing element (2251) slidably connected to the seating part (221) and the connecting slot (21), and after pressing, a first pressing mandrel (22511) may slide out of the connecting slot (21) and unlock the main second blocking device (14) of the carriage, then a spring (2252) restores the original position of the first pressing element (2251), and a sliding member-slider (2253) is located in the backrest frame (222) and the seating part (221), which may slide relative to the seating part (221), and the sliding member-slider (2253) adheres to the rotary plate (2254).

10. The baby carriage chassis according to claims 1-9, **characterized in that** the rotary plate (2254) is equipped with a protrusion (22542) that is located in the backrest frame (222), and the sliding member-slider (2253) is equipped with a groove (22531) capable of receiving the protrusion (22542) in it, and the sliding member-slider (2253) is equipped with a sloped surface (22532) that may brush against the protrusion (22542), and the seating part (221) is equipped with a projecting guiding portion (2211) that guides a guiding groove (22533) that moves laterally, and the backrest frame (222) is also equipped with a pressure portion (2212) capable of pressing one side of the first pressing element (2251).

11. The baby carriage chassis according to claim 9, **characterized in that** the operating part (22541) is a handle or a belt.

12. The baby carriage chassis according to claims 1-11, **characterized in that** the second blocking device (228) comprises a first protrusion (2281) placed on the rotary plate (2254), and the armrest seat (2261) is equipped with a second protrusion (2282) that may adhere to the first protrusion (2281) to prevent rotation of the rotary plate (2254) when the seat (22) and the body of the frame (10) are unfolded, and the backrest frame (222) is also equipped with a niche (2283) so as the first protrusion (2281) and the second protrusion (2282) slide thereinto when the backrest frame (222) is rotated and folded.

13. The baby carriage chassis according to claim 5, **characterized in that** the second blocking device (14) comprises a left connecting shell (141) connected to the rear footrest beam (12) and a right connecting shell (142) connected to the front footrest beam (11), and there is a space located between the right connecting shell (142) and the tappet assembly (13), which is equipped with a second spline (144) that may move relative to the space, and the left connecting shell (141) comprises a spline groove (145), the tappet assembly (13) comprises a spline groove (140), and the second spline (144) is located between the left connecting shell (141) and the right connecting shell (142), and the spline has resilient members (147) that may move, and the pressure member (148) has mandrels (1481) that may move the second spline (144), and a return spring (149) is located between the pressure member (148) and the spline groove (145) of the rear footrest beam (12).
